# EUROPÄISCHE PATENTSCHRIFT

(11) **EP 4 055 574 B1**
(45) Veröffentlichungstag und Bekanntmachung des Hinweises auf die Patenterteilung: **12.07.2023**
(21) Anmeldenummer: 20801192.4
(22) Anmeldetag: 02.11.2020
(51) Int. Cl.: B60W 30/16, B60W 30/165, B60W 50/14, G08G 1/00, H04W 4/46

(54) **VERFAHREN ZUM STEUERN EINES FAHRZEUGES SOWIE ABSTANDSREGEL-STEUEREINRICHTUNG**
METHOD FOR CONTROLLING A VEHICLE AND DISTANCE REGULATION CONTROL DEVICE
PROCÉDÉ DE COMMANDE D'UN VÉHICULE ET DISPOSITIF DE COMMANDE DE RÉGULATION DE DISTANCE

(30) Priorität: 08.11.2019 DE 102019130201
(43) Veröffentlichungstag der Anmeldung: 14.09.2022
(73) Patentinhaber: ZF CV Systems Global GmbH, 3006 Bern (CH)
(72) Erfinder: DIECKMANN, Thomas, 30982 Pattensen (DE)
(74) Vertreter: Schäferjohann, Volker
(86) Internationale Anmeldenummer: PCT/EP2020/080628
(87) Internationale Veröffentlichungsnummer: WO 2021/089453

(56) Entgegenhaltungen:
- WO-A1-2014/003630
- DE-A1-102015 211 117
- DE-A1-102016 011 325
- DE-A1-102018 000 620
- DE-A1-102018 109 235
- DE-T5-112016 001 612
- US-A1- 2010 256 835
- US-A1- 2017 344 023

## Beschreibung

Die Erfindung betrifft ein Verfahren zum Steuern eines Fahrzeuges sowie eine Abstandsregel-Steuereinrichtung.

In Fahrzeugen, insbesondere Nutzfahrzeugen, wird ein Abstandsregelsystem - herkömmlich auch als Abstandsregeltempomat oder adaptive cruise control (ACC) bezeichnet - eingesetzt, mit dem ein vorgegebener erster Soll-Folgeabstand zwischen einem Eigenfahrzeug und einem direkt vorausfahrenden Vorderfahrzeug eingestellt werden kann. Dazu wird von einer Abstandsregel-Steuereinrichtung des Abstandsregelsystems eine bestimmte Eigenfahrzeug-Soll-Beschleunigung oder ein Eigenfahrzeug-Soll-Geschwindigkeit vorgegeben und diese Eigenfahrzeug-Soll-Beschleunigung bzw. Eigenfahrzeug-Soll-Geschwindigkeit über ein Bremssystem und/oder ein Antriebssystem des Eigenfahrzeuges eingestellt, um den vorgegebenen ersten Soll-Folgeabstand einzuregeln.

Die Abstandsregel-Steuereinrichtung greift zur Einstellung der Eigenfahrzeug-Soll-Beschleunigung bzw. Eigenfahrzeug-Soll-Geschwindigkeit auf Umgebungssignale eines im Eigenfahrzeug angeordneten Umgebungserfassungssystems, insbesondere einem Radar-Sensor oder Lidar-Sensor, zurück und verarbeitet diese, um aktuelle fahrdynamische Informationen bezüglich der Fahrzeugumgebung, beispielsweise einen aktuellen Ist-Folgeabstand zu dem jeweiligen Vorderfahrzeug, als Regelgröße des Abstandsregelsystems einzubeziehen.

Zur Festlegung des ersten Soll-Folgeabstandes als Führungsgröße des Abstandsregelsystems wird normalerweise ein Mindest-Sicherheitsabstand festgelegt, der zumindest die Reaktionszeit des Fahrers und das Bremsvermögen der beteiligten Fahrzeuge berücksichtigt. Zusätzlich kann eine Auswahl vom Fahrer, z.B. "kurz", "mittel", "lang" einbezogen werden. Die Reaktionszeit dient zur Festlegung eines ersten Soll-Folgeabstandes, bei dem der Fahrer noch eine Chance hat, das Eigenfahrzeug beispielsweise bei einer Notbremsung des Vorderfahrzeuges rechtzeitig abzubremsen. Diese Reaktionszeit kann beispielsweise gemäß dem sog. Kölner Modell festgelegt werden.

Für den Fahrbetrieb in einem Platoon, in dem sich zwei oder mehrere Fahrzeuge koordiniert in einer Kolonne bewegen, ist herkömmlicherweise ein zentraler Koordinator vorgesehen, der sich in einem der Fahrzeuge des Platoons befindet und beispielsweise die Position und die Ist-Folgeabstände der einzelnen Fahrzeuge in Abhängigkeit von fahrdynamischen Parametern, beispielsweise einem Bremsvermögen, Fahrzeuggewicht, usw. festlegt und an die einzelnen Fahrzeuge verteilt. Die Kommunikation zwischen dem zentralen Koordinator und den einzelnen Fahrzeugen findet dabei über eine drahtlose V2X-Verbindung (V2X, vehicle-to-everything) statt. Dies dient der Abstimmung der Fahrzeuge untereinander und der Übertragung von fahrdynamischen Informationen, so dass die Fahrzeuge des Platoons schneller automatisiert aufeinander reagieren können.

Demnach ist in einem Platoon insbesondere die Latenzzeit zur Übertragung von V2X-Daten über die V2X-Verbindung relevant für eine koordinierte und sichere Einstellung der Fahrdynamik der einzelnen Fahrzeuge. Da die Latenzzeit normalerweise geringer ist als die Reaktionszeit des Fahrers, können die Fahrzeuge des Platoons in einem geringeren Ist-Folgeabstand zueinander fahren, wodurch insbesondere der Windschatten für eine spritsparende Fahrweise ausgenutzt werden kann, ohne dabei den Sicherheitsaspekt außeracht zu lassen.

Beispielhaft ist in JP 2008110620 A2, JP 2010117771 A2, WO 2017/035516 A1, DE 10 2012 212 339 A1 ein derartiges Platooning von Fahrzeugen beschrieben. In KR 20150075762 A ist weitergehend eine Lichtkommunikation zwischen unbemannten Fahrzeugen eines Platoons beschrieben.

In SE 1650608 A wird anhand von Umgebungsdaten eines Umgebungserfassungssystems geprüft, ob ein vorausfahrendes Vorderfahrzeug aufgrund seiner Abmessungen geeignet ist zum Bilden eines Platoons. Daraufhin werden bestimmte Soll-Folgeabstände festgelegt, die zwischen den Fahrzeugen einzuhalten sind.

In DE 10 2017 004 741 A1 ist beschrieben, das Abstandsregelsystem eines Eigenfahrzeuges über eine entsprechende Schnittstelle zur Einstellung eines für das Platooning vorgegebenen Soll-Folgeabstandes zu verwenden. Auch in WO 2018/054518 A1 ist beschrieben, das Abstandsregelsystem für die Einstellung des Soll-Folgeabstandes, insbesondere in Abhängigkeit eines Bremsvermögens des Fahrzeuges zu verwenden.

Aus der DE 10 2015 211 117 A1 ist ein Kolonnenfahrsteuersystem für eine Kolonne von Fahrzeugen bekannt. Jedes der Fahrzeuge der Kolonne umfasst eine Fahrzeug-zu-Fahrzeug-Kommunikationseinrichtung, die dazu eingerichtet ist, zumindest einen Fahrzeugparameter des Fahrzeugs an ein nachfolgendes Fahrzeug zu versenden und den Fahrzeugparameter eines vorausfahrenden Fahrzeugs zu empfangen. Bei der Steuerung der Fahrzeuge der Kolonne wird eine Fahrzeug-zu-Fahrzeug-Steuereinrichtung benutzt, in der bei der Berechnung des einzustellenden Abstandes zum benachbarten Fahrzeug auch die Signallaufzeit der Fahrzeug-zu-Fahrzeug-Kommunikation berücksichtigt wird.

Aufgabe der Erfindung ist, ein Verfahren, eine Abstandsregel-Steuereinrichtung sowie ein Eigenfahrzeug anzugeben, die in einfacher und zuverlässiger Weise eine koordinierte Fahrt von mindestens zwei Fahrzeugen in einem Konvoi ermöglichen.

Diese Aufgabe wird durch ein Verfahren nach Anspruch 1 sowie eine Abstandsregel-Steuereinrichtung und ein Eigenfahrzeug nach den weiteren unabhängigen Ansprüchen gelöst.

Erfindungsgemäß ist demnach ein Verfahren zum Steuern eines Eigenfahrzeuges mit einem Bremssystem, einem Antriebssystem und einem Abstandsregelsystem vorgesehen, wobei das Abstandsregelsystem ausgebildet ist, einen Ist-Folgeabstand zwischen dem Eigenfahrzeug und einem vorausfahrenden Vorderfahrzeug auf einen vorgegebenen Soll-Folgeabstand einzuregeln, wobei der Soll-Folgeabstand in Abhängigkeit eines aktivierten Betriebsmodus des Abstandsregelsystems vorgegeben wird, wobei
- in einem aktivierten ersten Betriebsmodus ein erster Soll-Folgeabstand in Abhängigkeit einer Reaktionszeit eines Fahrers des Eigenfahrzeuges, und
- in einem aktivierten zweiten Betriebsmodus ein zweiter Soll-Folgeabstand unabhängig von der Reaktionszeit des Fahrers des Eigenfahrzeuges vorgegeben wird,
wobei zur Aktivierung des zweiten Betriebsmodus in einem Plausibilisierungsschritt geprüft wird, ob zwischen dem Vorderfahrzeug und dem Eigenfahrzeug V2X-Daten sicher und zuverlässig über eine V2X-Verbindung ausgetauscht werden oder ausgetauscht werden können.

Vorteilhafterweise kann dadurch ohne die Verwendung eines zentralen Koordinators bzw. eines Leitfahrzeuges ein zweiter Betriebsmodus des Abstandsregelsystems aktiviert werden, in dem ein zweiter Soll-Folgeabstand als Führungsgröße festgelegt wird, in dem die Reaktionszeit des Fahrers nicht mehr berücksichtigt wird, der also vorzugsweise kleiner ist als ein erster Soll-Folgeabstand. Dadurch können sich die beiden Fahrzeuge in einem Konvoi-Modus in kürzeren Ist-Folgeabständen bewegen, die von dem Abstandsregelsystem als Regelgröße eingestellt werden.

Um dennoch eine sichere Fahrt zu gewährleisten, wird der zweite Betriebsmodus mit dem zweiten Soll-Folgeabstand lediglich dann aktiviert bzw. zugelassen, wenn plausibel festgestellt wird, dass zwischen den Fahrzeugen eine V2X-Verbindung (V2X, vehicle-to-everything) aufgebaut ist. In dem Fall können fahrdynamische Informationen, die für eine Steuerung des Eigenfahrzeuges z.B. bei einer Notbremsung relevant sind, über diesen schnellen Übertragungsweg ausgetauscht werden und die Reaktionszeit des Fahrers kann bei der Festlegung und Einstellung des Ist-Folgeabstandes vorzugsweise unberücksichtigt bleiben, da dieser für einen schnellen Eingriff nicht mehr unbedingt bzw. nur als Redundanz nötig ist. Dadurch verkürzt sich der mögliche Ist-Folgeabstand und es kann ein kraftstoffsparender Fahrbetrieb in einem Konvoi-Modus erfolgen. Gleichwirkend damit ist, dass der erste Soll-Folgeabstand in Abhängigkeit eines Bruchteils bzw. eines Prozentsatzes der Reaktionszeit des Fahrers vorgegeben wird. Dies ist gleichbedeutend damit, dass die tatsächliche Reaktionszeit des Fahrers bei der Vorgabe des Soll-Folgeabstandes unberücksichtigt bleibt.

Vorzugsweise ist dabei vorgesehen, dass der erste Betriebsmodus automatisch aktiviert wird, wenn zwischen dem Vorderfahrzeug und dem Eigenfahrzeug keine V2X-Daten über eine V2X-Verbindung sicher und zuverlässig ausgetauscht werden oder ausgetauscht werden können. Demnach wird angenommen, dass die schnelle Datenübertragung der fahrdynamischen Informationen über die V2X-Verbindung nicht sicher möglich ist, so dass basierend darauf auch keine schnellere Ansteuerung des Eigenfahrzeuges mehr möglich ist und wieder die Reaktionszeit des Fahrers relevant wird, um beispielsweise auf eine Notbremsung zu reagieren.

Vorzugsweise ist vorgesehen, dass zur Aktivierung des zweiten Betriebsmodus weiterhin geprüft wird, ob sich das vorausfahrende Vorderfahrzeug auf derselben Fahrspur wie das Eigenfahrzeug befindet, vorzugsweise durch Vergleichen einer globalen Vorderfahrzeug-Position mit einer globalen Eigenfahrzeug-Position, wobei die globale Vorderfahrzeug-Position aus den über die V2X-Verbindung übertragenen V2X-Daten abgeleitet wird. Vorteilhafterweise wird also nach dem Ausbilden einer V2X-Verbindung zusätzlich geprüft bzw. plausibilisiert, ob das Vorderfahrzeug für den Abstandsregelvorgang überhaupt relevant ist, d.h. sich auf derselben Fahrspur befindet. Dazu werden die dem Vorderfahrzeug zugeordneten ohnehin über die V2X-Verbindung übertragenen und auch im Eigenfahrzeug zur Verfügung stehenden globalen Positionsinformationen für einen Vergleich herangezogen, so dass eine einfache Überprüfung ermöglicht wird.

Vorzugsweise ist vorgesehen, dass zur Aktivierung des zweiten Betriebsmodus in dem Plausibilisierungsschritt weiterhin geprüft wird, ob der Ist-Folgeabstand zwischen dem Eigenfahrzeug und dem Vorderfahrzeug in etwa gleichbleibt. Damit kann in einfacher Weise plausibilisiert werden, ob sich das Eigenfahrzeug in einem in etwa gleichbleibenden Abstand zum Vorderfahrzeug bewegt. Damit kann mit hoher Wahrscheinlichkeit die Absicht abgeleitet werden, dass der Fahrer des Eigenfahrzeuges im Windschatten fahren möchte und auch das Vorderfahrzeug dem nicht entgegensteuert, beispielsweise durch ein Verlassen derselben Fahrspur. Damit kann mit weiteren Informationen plausibel festgestellt werden, ob beide Fahrzeuge, und dabei insbesondere das Eigenfahrzeug, in einem Konvoi fahren möchten, ohne dass dazu ein zentraler Koordinator bzw. ein Leitfahrzeug nötig ist.

Vorzugsweise ist vorgesehen, dass zur Aktivierung des zweiten Betriebsmodus in dem Plausibilisierungsschritt weiterhin geprüft wird, ob sich das Vorderfahrzeug in einem Sichtfeld einer Kamera des Eigenfahrzeuges befindet und anhand von Kameradaten der Kamera erkannt wird, ob das Vorderfahrzeug auf derselben Fahrspur wie das Eigenfahrzeug fährt. Vorteilhafterweise kann also zur Plausibilisierung weiterhin auf die Informationen einer Kamera zurückgegriffen werden, um zu prüfen, ob ein für den Abstandsregelvorgang relevantes Vorderfahrzeug vorhanden ist.

Weiterführen kann dazu vorgesehen sein, dass zur Aktivierung des zweiten Betriebsmodus in dem Plausibilisierungsschritt geprüft wird,
- ob über die V2X-Verbindung übertragene fahrdynamische Informationen, beispielsweise eine Vorderfahrzeug-Soll-Verzögerung und/oder eine Vorderfahrzeug-Ist-Geschwindigkeit und/oder eine damit zusammenhängende Grö-βe, mit den von der Kamera ausgegebenen Kameradaten übereinstimmen,
   und/oder
- ob der vom Abstandsregelsystem ermittelte Ist-Folgeabstand aus den von der Kamera ermittelten Kameradaten hergeleitet werden kann.

Damit kann ergänzend eine Plausibilisierung von unterschiedlichen Informationsquellen stattfinden, wobei der Ist-Folgeabstand beispielsweise über einen Radar-Sensor und/oder Lidar-Sensor des Umgebungserfassungssystems und über die Kameradaten von der Kamera des Umgebungserfassungssystems hergeleitet werden kann. Beide können auf Übereinstimmung geprüft werden, um festzustellen, ob ein Konvoi-Modus mit hoher Wahrscheinlichkeit gewünscht und demnach die Aktivierung des zweiten Betriebsmodus des Abstandsregelsystems sinnvoll bzw. angemessen ist.

Vorzugsweise ist weiterhin vorgesehen, dass der Plausibilisierungsschritt zur Aktivierung des zweiten Betriebsmodus über einen Plausibilisierungszeitraum durchgeführt wird. Demnach werden die beschriebenen Überprüfungen im Rahmen des Plausibilisierungsschrittes über einen bestimmten Zeitraum ausgeführt, um Störungen auszuschließen bzw. kurzzeitig vorausfahrende Vorderfahrzeuge, z.B. die Fahrspur querende Fahrzeuge, nicht als Fahrzeuge erkannt werden, mit denen in einem Konvoi gefahren werden soll.

Vorzugsweise ist also vorgesehen, dass der zweite Betriebsmodus aktiviert wird, wenn in dem Plausibilisierungsschritt, der die soeben beschriebenen Unterschritte aufweist, plausibel festgestellt wird, dass die Fahrzeuge beabsichtigen bzw. vor allem das Eigenfahrzeug beabsichtigt in einem Konvoi-Modus in einem Ist-Folgeabstand ohne Berücksichtigung der Reaktionszeit zueinander zu fahren. Wird also in den jeweils beschriebenen Schritten festgestellt, dass beispielsweise das Vorderfahrzeug über dem Plausibilisierungszeitraum auf derselben Fahrspur fährt, was z.B. aus den globalen Positionen und/oder den Kameradaten wie oben beschrieben folgen kann, und eine V2X-Verbindung über den Plausibilisierungszeitraum sicher hergestellt ist, so wird der zweite Betriebsmodus aktiviert und der zweite Soll-Folgeabstand eingestellt. Gibt es aus einem der Unterschritte des Plausibilisierungsschrittes Zweifel daran, dass ein Konvoi-Modus zwischen den beiden Fahrzeugen gewünscht oder sinnvoll ist, wird der zweite Betriebsmodus vorzugsweise nicht aktiviert, da nicht sicher bzw. plausibel festzustellen ist, ob die Reaktionszeit unberücksichtigt bleiben kann.

Vorzugsweise wird als Reaktionszeit zur Festlegung des ersten Soll-Folgeabstandes dabei eine Reaktionszeit von zwischen 0,8s und 1,5s festgelegt, wobei die Reaktionszeit beispielsweise gemäß dem dem Fachmann bekannten Kölner Modell festgelegt werden kann.

Vorzugsweise ist außerdem vorgesehen, dass
- der erste Soll-Folgeabstand aus einem Mindest-Sicherheitsabstand, der zumindest einen Reaktionsabstand und vorzugsweise weiterhin einen Brems-Sicherheitsabstand aufgrund der Bremsvermögen der beteiligten Fahrzeuge berücksichtigt, und
- der zweite Soll-Folgeabstand aus dem Mindest-Sicherheitsabstand, der zumindest einen Latenzabstand und vorzugsweise weiterhin den Brems-Sicherheitsabstand aufgrund der Bremsvermögen der beteiligten Fahrzeuge berücksichtigt und den Reaktionsabstand nicht berücksichtigt,
   folgt, wobei
- der Reaktionsabstand aus der Reaktionszeit unter Berücksichtigung der aktuellen Eigenfahrzeug-Ist-Geschwindigkeit, und
- der Latenzabstand aus einer Latenzzeit unter Berücksichtigung der aktuellen Eigenfahrzeug-Ist-Geschwindigkeit ermittelt wird, wobei die Latenzzeit die Zeit zum Übertragen der V2X-Daten zwischen dem Eigenfahrzeug und dem Vorderfahrzeug über die V2X-Verbindung angibt.

Demnach wird je nach Betriebsmodus auf die jeweils relevante Zeit, d.h. die Reaktionszeit oder die Latenzzeit zurückgegriffen, die eine Auswirkung auf den Soll-Folgeabstand hat, damit durch den Fahrer bzw. automatisiert vom Eigenfahrzeug auf eine Bremssituation des Vorderfahrzeuges, vorzugsweise eine Notbremssituation, adäquat reagiert werden kann, ohne dabei einen Auffahrunfall zu verursachen. Da die Latenzzeit normalerweise geringer ist als die Reaktionszeit des Fahrers, ist der zweite Soll-Folgeabstand entsprechend geringer, so dass ein kraftstoffsparender Fahrbetrieb im Konvoi-Modus gewährleistet werden kann.

Ergänzend kann vorgesehen sein, dass
- der erste Soll-Folgeabstand aus einer Summe aus Mindest-Sicherheitsabstand zumindest unter Berücksichtigung des Reaktionsabstandes und einem vom Fahrer ausgewählten Zusatz-Abstand; und
- der zweite Soll-Folgeabstand aus einer Summe aus Mindest-Sicherheitsabstand zumindest unter Berücksichtigung des Latenzabstandes und ohne Berücksichtigung des Reaktionsabstandes und einem vom Fahrer ausgewählten Zusatz-Abstand folgt. Damit kann in einem einfachen Rechenschritt der jeweilige Soll-Abstand ermittelt werden, wobei ergänzend auch noch eine Auswahl eines Fahrers berücksichtigt werden kann, beispielsweise gemäß einer Unterteilung in "kurz", "mittel", "lang". Somit kann der Fahrer einen für sich in der aktuellen Fahrsituation passenden Zusatz-Abstand auswählen, der dann zu dem jeweiligen Mindest-Sicherheitsabstand im jeweiligen Betriebsmodus hinzukommt.

Die Erfindung sieht vor, dass
- der erste Soll-Folgeabstand mit dem zweiten Soll-Folgeabstand und/oder die Reaktionszeit mit der Latenzzeit verglichen wird, und
- bei Aktivierung des zweiten Betriebsmodus der zweite Soll-Folgeabstand gleich dem ersten Soll-Folgeabstand entspricht, wenn festgestellt wird, dass der zweite Soll-Folgeabstand größer ist als der erste Soll-Folgeabstand und/oder die Latenzzeit größer ist als die Reaktionszeit des Fahrers. Alternativ kann in diesem Fall erfindungsgemäß auch automatisiert der erste Betriebsmodus aktiviert
   werden, da bei einer zu langen Latenzzeit auf einen Fehler in der V2X-Verbindung und damit darauf geschlossen werden kann, dass die V2X-Daten nicht sicher und zuverlässig über die V2X-Verbindung übertragen werden oder werden können. Wird gemäß einer der Alternativen auf den ersten Soll-Folgeabstand zurückgegangen, so wird dies dem Fahrer vorzugsweise optisch und/oder akustisch und/oder haptisch mitgeteilt.

Vorteilhafterweise kann dadurch auch bei Aktivierung des zweiten Betriebsmodus auf den jeweils kürzeren Soll-Abstand zurückgegriffen werden, wenn bei langen Latenzzeiten und damit einer nicht zuverlässigen V2X-Verbindung der Fahrer mit seiner Reaktionszeit tatsächlich früher eingreifen würde als es automatisiert mit den fahrdynamischen Informationen, die über die V2X-Daten übertragen werden, der Fall sein würde. Damit kann auch dann noch ein sicherer Ist-Folgeabstand eingeregelt werden.

Vorzugsweise ist weiterhin vorgesehen, dass der Plausibilisierungsschritt lediglich bei Aktivierung eines Aktivierungsmittels zugelassen wird, wobei das Aktivierungsmittel beispielsweise ein im Eigenfahrzeug angeordneter Schalter ist, der vom Fahrer zeitweise oder dauerhaft aktiviert werden kann. Demnach kann der Fahrer selbst entscheiden, ob eine Aktivierung des zweiten Betriebsmodus bzw. ein kürzerer Ist-Folgeabstand ohne Berücksichtigung der Reaktionszeit stattfinden soll.

Weiterführend ist dabei vorgesehen, dass bei Deaktivierung des Aktivierungsmittels automatisch der erste Betriebsmodus aktiviert oder beibehalten wird. Dadurch kann aktiv festgelegt werden, wann in den ersten Betriebsmodus bzw. die normale Abstandsregelung gewechselt wird.

Vorzugsweise ist außerdem vorgesehen, dass der Fahrer den zweiten Betriebsmodus deaktivieren kann, beispielsweise durch das Bedienen eines Bremspedals und/oder eines Gaspedals. Damit kann vom Fahrer auch ohne Deaktivierung des Aktivierungsmittels, wie bei normalen Abstandsregelungen auch, durch einen aktiven Eingriff in die Fahrdynamik der zweite Betriebsmodus deaktiviert werden. Vorzugsweise ist dabei vorgesehen, dass durch die Deaktivierung des zweiten Betriebsmodus durch den Fahrer das Abstandsregelsystem deaktiviert oder der erste Betriebsmodus aktiviert wird. Die Abstandsregelung wird also wieder vollständig in die Hand des Fahrers gelegt oder aber wieder wie normal in Abhängigkeit der Reaktionszeit durchgeführt.

Erfindungsgemäß ist weiterhin eine Abstandsregel-Steuereinrichtung mit den Merkmalen des Anspruchs 19 vorgesehen.

Besonders vorteilhaft gegenüber den bislang bekannten Platooning-Konzepten ist die Tatsache, dass sich durch den oben beschriebenen Ansatz beliebig lange Kolonnen von Fahrzeugen aufbauen lassen, ohne dass ein zentraler Koordinator bzw. ein Leitfahrzeug erforderlich ist. Das erhöht die Effizienz gegenüber Zweier-Platoons erheblich, da keine Führungsfahrzeuge mehr erforderlich sind.

Erfindungsgemäß ist weiterhin ein Eigenfahrzeug mit einem Abstandsregelsystem aufweisend eine erfindungsgemäße Abstandsregel-Steuereinrichtung.

Die Erfindung wird im Folgenden anhand eines Ausführungsbeispiels näher erläutert. Es zeigen:
- Fig. 1: eine Fahrsituation mit einem Eigenfahrzeug und einem Vorderfahrzeug; und
- Fig. 2: ein Flussdiagramm des erfindungsgemäßen Verfahrens.

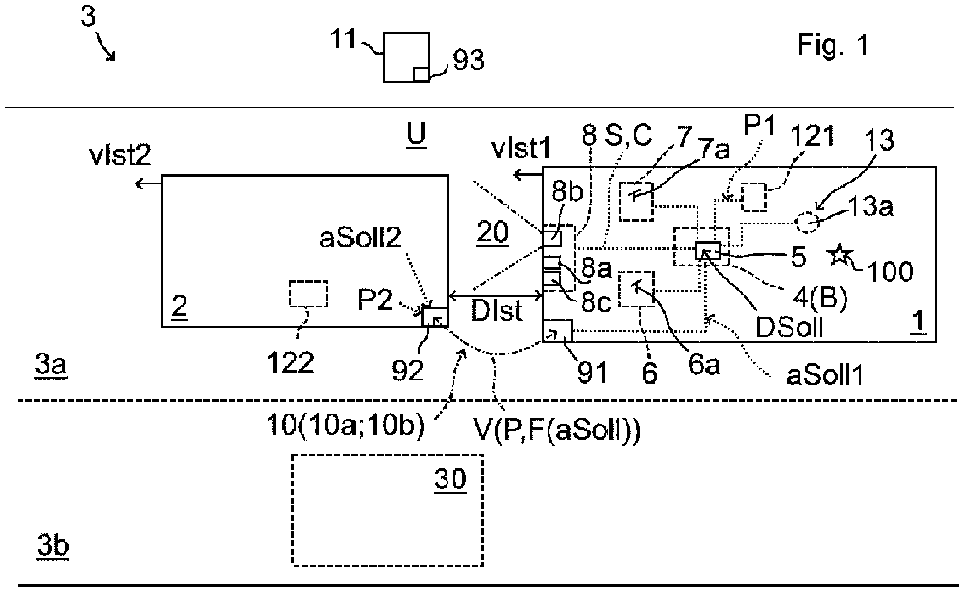

In Figur 1 ist schematisch ein Eigenfahrzeug 1 gezeigt, das sich in einem Ist-Folgeabstand Dlst zu einem Vorderfahrzeug 2 auf einer Fahrbahn 3 mit zwei Fahrspuren 3a, 3b bewegt. Das Eigenfahrzeug 1 weist ein Abstandsregelsystem 4 mit einer Abstandsregel-Steuereinrichtung 5 auf, das dazu dient, den Ist-Folgeabstand Dlst auf einen vorgegebenen Soll-Folgeabstand DSoll einzuregeln. Dazu ist die Abstandsregel-Steuereinrichtung 5 ausgebildet, ein Bremssystem 6 und/oder ein Antriebssystem 7 des Eigenfahrzeuges 1 anzusteuern, um den Ist-Folgeabstand Dlst durch Verzögern oder Beschleunigen des Eigenfahrzeuges 1 gezielt anzupassen.

Zur Erfassung des Ist-Folgeabstandes Dlst greift die Abstandsregel-Steuereinrichtung 5 auf ein Umgebungserfassungssystem 8 im Eigenfahrzeug 1 zurück, wobei das Umgebungserfassungssystem 8 UmgebungsSignale S erzeugt, die eine Fahrzeugumgebung U charakterisieren. Das Umgebungserfassungssystem 8 kann dazu in seiner einfachsten Form beispielsweise einen Radar-Sensor 8a und/oder einen Lidar-Sensor 8c aufweisen. Damit lässt sich aus den Umgebungs-Signalen S beispielsweise der aktuelle Ist-Folgeabstand Dlst zur Vorderfahrzeug 2 ermitteln, der als Regelgröße für die Abstandsregelung im Abstandsregelsystem 4 verwendet wird.

Das Eigenfahrzeug 1 weist weiterhin ein Eigenfahrzeug-V2X-Modul 91 (V2X; vehicle-to-everything) auf, das ausgebildet ist, über eine drahtlose V2X-Verbindung 10 mit Objekten in der Fahrzeugumgebung U, die ebenfalls ein derartiges V2X-Modul 92, 93 aufweisen, zu kommunizieren. Die V2X-Verbindung 10 ist dabei eine kurzreichweitige Datenverbindung, beispielsweise WLAN 10a, DSRC (Dedicated Short Range Communication) 10b, etc. Gemäß der gezeigten Ausführungsform weist beispielsweise das Vorderfahrzeug 2 ein Vorderfahrzeug-V2X-Modul 92 auf, so dass über eine darüber ausgebildete V2X-Verbindung 10 V2X-Daten V zwischen den beiden Fahrzeugen 1, 2 drahtlos ausgetauscht werden können.

Die V2X-Daten V können hierbei beispielsweise eine globale Position P, z.B. bestimmt über ein globales Satelliten-Navigationssystem (GNSS; Global Navigation(al) Satellite System), z.B. GPS, Differential GPS (DGPS), Galileo, GLONASS, etc., des jeweiligen Fahrzeuges 1, 2 und/oder Bewegungsinformationen bzw. fahrdynamische Informationen F des jeweiligen Fahrzeuges 1, 2, beispielsweise eine Fahrzeug-Soll-Verzögerung aSoll oder eine damit zusammenhängende Größe, beinhalten. Ergänzend kann auch eine Infrastruktureinrichtung 11 ein Infrastruktureinrichtungs-V2X-Modul 93 besitzen, um einen Austausch von V2X-Daten V zu ermöglichen. Zum Ermitteln der globalen Position P ist im Eigenfahrzeug 1 und im Vorderfahrzeug 2 jeweils eine Positionserfassungseinrichtung 121, 122 vorgesehen.

Anhand der V2X-Daten V kann das Eigenfahrzeug 1 seine Fahrdynamik auf das Vorderfahrzeug 2 abstimmen, was gemäß der Erfindung dazu verwendet wird, den Ist-Folgeabstand Dlst auf eine kürzere Distanz als normalerweise einzustellen und damit in einer Art Konvoi-Modus M zu fahren. Damit wird von dem Umstand Gebrauch gemacht, dass aufeinander abgestimmte Fahrzeuge 1, 2 einen kürzeren Ist-Folgeabstand Dlst einstellen können, um insbesondere den Windschatten besser auszunutzen und damit ökonomischer bzw. kraftstoffsparender fahren zu können, ohne dabei ein erhöhtes Sicherheitsrisiko aufgrund des kürzeren Ist-Folgeabstandes Dlst einzugehen. Die Fahrzeuge 1, 2 bewegen sich also in einem Konvoi.

Das Abstandsregelsystem 4 wird dazu in zwei Betriebsmodi B; B1, B2 betrieben, die über die Abstandsregel-Steuereinrichtung 5 situativ eingestellt bzw. aktiviert werden können:
In einem ersten Betriebsmodus B1, der einer normalen Abstandsregelung entspricht, wird beispielsweise zunächst ein Mindest-Sicherheitsabstand DW zum Vorderfahrzeug 2 festgelegt. Vom Fahrer 100 kann ergänzend ein Zusatz-Abstand DZ ausgewählt werden, was beispielsweise in Form einer groben Unterteilung, z.B. "kurz", "mittel", "lang", erfolgen kann. Die Abstandsregel-Steuereinrichtung 5 regelt dann mit dem ermittelten Ist-Folgeabstand Dlst als Regelgröße automatisch auf einen ersten Soll-Folgeabstand DSoll1 als Führungsgröße über das Bremssystem 6 und/oder das Antriebssystem 7 des Eigenfahrzeuges 1 ein.

Der erste Soll-Folgeabstand DSoll1 ergibt sich dabei aus dem festgelegten Mindest-Sicherheitsabstand DW unter Berücksichtigung zumindest eines Reaktionsabstandes DR und eines Brems-Sicherheitsabstandes DB, der ein Bremsvermögen BV1, BV2 der beteiligten Fahrzeuge 1, 2 berücksichtigt, und dem fahrerwunschabhängigen Zusatz-Abstand DZ. Der erste Soll-Folgeabstand DSoll1 folgt dann beispielsweise aus der Summe DR + DB (BV1, BV2) + DZ ("kurz", "mittel", "lang"). Über den Brems-Sicherheitsabstand DB können insbesondere möglicherweise vorhandene Varianzen in den Bremsvermögen BV1, BV2 der beteiligten Fahrzeuge 1, 2 einbezogen werden.

Demnach wird im ersten Betriebsmodus B1 des Abstandsregelsystems 4 bei der Festlegung des Mindest-Sicherheitsabstandes DW eine bestimmte Reaktionszeit tR des Fahrers berücksichtigt, so dass das Eigenfahrzeug 1 beispielsweise bei einer Notbremsung des Vorderfahrzeuges 2 noch rechtzeitig, d.h. mit keinen oder minimalen Kollisionsfolgen (Auffahrunfall), abgebremst werden kann. Diese Reaktionszeit tR entspricht in Abhängigkeit der aktuellen Eigenfahrzeug-Ist-Geschwindigkeit vlst1 einem bestimmten Reaktionsabstand DR, der im ersten Soll-Folgeabstand DSoll1, auf den im ersten Betriebsmodus B1 geregelt wird, inbegriffen ist.

In einem zweiten Betriebsmodus B2 (Folgebetrieb) wird ein zweiter Soll-Folgeabstand DSoll2 als Führungsgröße vorgegeben, wobei dieser den Reaktionsabstand DR nicht berücksichtigt. Stattdessen kann ein Latenzabstand DL berücksichtigt werden, so dass sich der zweite Soll-Folgeabstand DSoll2 für den zweiten Betriebsmodus B2 aus dem festgelegten Mindest-Sicherheitsabstand DW unter Berücksichtigung zumindest des Latenzabstandes dL und des Brems-Sicherheitsabstandes DB, der ein Bremsvermögen BV1, BV2 der beteiligten Fahrzeuge 1, 2 berücksichtigt, und dem fahrerwunschabhängigen Zusatz-Abstand DZ ergibt. Der zweite Soll-Folgeabstand DSoll2 folgt dann beispielsweise aus der Summe DL + DB (BV1, BV2) + DZ ("kurz", "mittel", "lang"). Der Latenzabstand DL ergibt sich dabei unter Berücksichtigung der aktuellen Eigenfahrzeug-Ist-Geschwindigkeit vlst1 aus einer Latenzzeit tL, die für die Übertragung der V2X-Daten V zwischen den Fahrzeugen 1, 2 über die V2X-Verbindung 10 benötigt wird.

Im zweiten Betriebsmodus B2 wird dabei angenommen, dass sich das Eigenfahrzeug 1 über die V2X-Verbindung 10 mit dem Vorderfahrzeug 2 abstimmt. In einer Notbremssituation oder auch einer allgemeinen Bremssituation ist also nicht mehr die Reaktionszeit tR des Fahrers maßgeblich für die Einleitung einer (Not)-Bremsung, sondern die Latenzzeit tL zum Übertragen der globalen Position P bzw. der fahrdynamischen Informationen F, d.h. insbesondere der Vorderfahrzeug-Soll-Verzögerung aSoll2 bei einer (Not)-Bremssituation, vom Vorderfahrzeug 2 auf das Eigenfahrzeug 1. Das Eigenfahrzeug 1 kann dann anhand dieser Vorderfahrzeug-Soll-Verzögerung aSoll2 automatisiert eine (Not-)Bremsung mit einer entsprechenden Eigenfahrzeug-Soll-Verzögerung aSoll1 veranlassen.

Da die Latenzzeit tL normalerweise geringer ist als die Reaktionszeit tR, ist der zweite Soll-Folgeabstand DSoll2 normalerweise geringer als der erste Soll-Folgeabstand DSoll1. Die Latenzzeiten tL der V2X-Verbindung 10 liegen normalerweise im Bereich von 30ms bis 300ms während Reaktionszeiten tR zwischen 800ms und 1500ms liegen. Im zweiten Betriebsmodus B2 können also aufgrund der Koordination der beiden Fahrzeuge 1, 2 über die V2X-Kommunikation 10 geringere Ist-Folgeabstände Dlst zwischen den Fahrzeugen 1, 2 eingestellt werden, ohne dass dadurch die Sicherheit gegenüber dem ersten Betriebsmodus B1 beeinträchtigt wird.

Unter Umständen kann von der Abstandsregel-Steuereinrichtung 5 ständig überprüft werden, ob gilt: DSoll2 < DSoll1 bzw. tL < tR, so dass bei außergewöhnlich hohen Latenzzeiten tL - auch im zweiten Betriebsmodus B2 - dem Fahrer und damit der Reaktionszeit tR bzw. dem ersten Soll-Folgeabstand DSoll1 der Vorzug gegeben wird, falls dieser kleiner ist als der zweite Soll-Folgeabstand DSoll2. In dem Fall kann der zweite Soll-Folgeabstand DSoll2 im zweiten Betriebsmodus B2 auf den ersten Soll-Folgeabstand DSoll1 festgesetzt werden, oder aber - gleichbedeutend damit - die Latenzzeit tL auf die Reaktionszeit tR festgesetzt oder der erste Betriebsmodus B1 aktiviert werden. In dem Fall ist der Fahrer entsprechend optisch über ein Display und/oder akustisch über ein Signalton und/oder haptisch über das Lenkrad zu warnen.

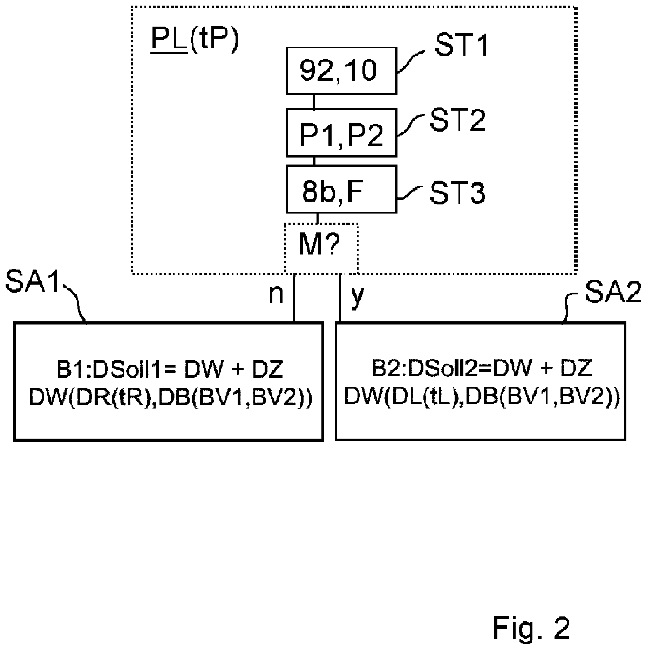

Um den zweiten Betriebsmodus B2 mit vorzugsweise verringertem zweiten Soll-Folgeabstand DSoll2 zu aktivieren, findet gemäß Fig. 2 vorab ein Plausibilisierungsschritt PL statt, in dem festgestellt wird, ob das Eigenfahrzeug 1 einem Vorderfahrzeug 2 folgt und beide Fahrzeuge 1, 2, insbesondere das Eigenfahrzeug 1 mit hoher Wahrscheinlichkeit beabsichtigen bzw. beabsichtigt in einem Konvoi-Modus M zu fahren, d.h. mit einem Ist-Folgeabstand Dlst ohne Berücksichtigung der Reaktionszeit tR bzw. des Reaktionsabstandes DR. Es wird also anhand der Fahrsituation der beiden Fahrzeuge 1, 2 plausibilisiert, ob ein Konvoi-Modus M für das hinterherfahrende Eigenfahrzeug 1 sinnvoll bzw. angemessen ist.

Dies kann beispielsweise dadurch erfolgen, dass zunächst in einem ersten Unterschritt ST1 ermittelt wird, ob das Vorderfahrzeug 2 überhaupt ein Vorderfahrzeug-V2X-Modul 92 aufweist bzw. ob eine V2X-Verbindung 10 zum Vorderfahrzeug 2 aufgebaut werden kann, so dass nicht die Reaktionszeit tR sondern die Latenzzeit tL wie oben beschrieben relevant wird. Dies kann beispielsweise dadurch erfolgen, dass das Eigenfahrzeug-V2X-Modul 91 von der Abstandsregel-Steuereinrichtung 5 ständig auf eingehende V2X-Daten V überwacht wird. Das Bestehen einer oder die Möglichkeit der Ausbildung einer V2X-Verbindung 10 kann aber auch bereits vorab geprüft worden sein.

In einem anschließenden zweiten Unterschritt ST2 wird geprüft, ob die eigehenden V2X-Daten V auch tatsächlich von einem Vorderfahrzeug 2 stammen, das sich auf derselben Fahrspur 3a wie das Eigenfahrzeug 1 befindet. Dadurch kann ausgeschlossen werden, dass V2X-Daten V von einem benachbarten Fahrzeug 30 auf der benachbarten Fahrspur 3b empfangen werden, zu dem kein Soll-Folgeabstand DSoll einzuregeln ist und mit dem auch keine Fahrt in einem Konvoi stattfinden soll.

Diese Überprüfung im zweiten Unterschritt ST2 kann anhand der über die V2X-Daten V übermittelten globalen Vorderfahrzeug-Position P2 erfolgen. Weist die globale Vorderfahrzeug-Position P2 in Abstimmung mit der globalen Eigenfahrzeug-Position P1 darauf hin, dass sich das Vorderfahrzeug 2 auf derselben Fahrspur 3a wie das Eigenfahrzeug 1 befindet, kann dies als Indikator angesehen werden, dass beide Fahrzeuge 1, 2 mit hoher Wahrscheinlichkeit beabsichtigen in einem Platooning-Modus M mit einem Ist-Folgeabstand Dlst ohne Berücksichtigung der Reaktionszeit tR bzw. des Reaktionsabstandes DR zu fahren.

Weiterhin kann anhand der über die V2X-Verbindung 10 übertragenen fahrdynamischen Informationen F, beispielsweise der Vorderfahrzeug-Soll-Verzögerung aSoll2 und/oder einer Vorderfahrzeug-Ist-Geschwindigkeit vlst2 und/oder einer damit zusammenhängenden Größe, geprüft werden, ob die Fahrtrichtung beider Fahrzeuge 1, 2 übereinstimmt. Zudem kann geprüft werden, ob der Ist-Folgeabstand Dlst zwischen den beiden Fahrzeugen 1, 2 über einen bestimmten Zeitraum in etwa gleich bleibt.

Zudem kann in einem dritten Unterschritt ST3 auf weitere Komponenten des Umgebungserfassungssystems 8 im Eigenfahrzeug 1 zurückgegriffen werden, beispielsweise auf eine Kamera 8b, die mit ihrem Sichtfeld 20 auf die Fahrzeugumgebung U ausgerichtet ist. Anhand der Kameradaten C der Kamera 8b kann beispielsweise festgestellt werden, ob sich überhaupt ein Vorderfahrzeug 1 im Sichtfeld 20 der Kamera 8b befindet und ein Vorderfahrzeug 1 zudem auf derselben Fahrspur 3a wie das Eigenfahrzeug 1 fährt. Daraus kann ebenfalls plausibel darauf geschlossen werden, ob beide Fahrzeuge 1, 2, insbesondere das Eigenfahrzeug 1, mit hoher Wahrscheinlichkeit beabsichtigen in einem Konvoi-Modus M mit einem Ist-Folgeabstand Dlst ohne Berücksichtigung der Reaktionszeit tR bzw. des Reaktionsabstandes DR zu fahren. Ergänzend können die über die V2X-Verbindung 10 übertragenen fahrdynamischen Informationen F, beispielsweise der Vorderfahrzeug-Soll-Verzögerung aSoll2 und/oder einer Vorderfahrzeug-Ist-Geschwindigkeit vlst2 und/oder eine damit zusammenhängende Größe, mit den Kameradaten C abgeglichen bzw. damit plausibilisiert werden. Zudem kann auch geprüft werden, ob der über den Radar-Sensor 8a und/oder den Lidar-Sensor 8c ermittelte Ist-Folgeabstand Dlst zu dem mit der Kamera 8b ermittelten Vorderfahrzeug 2 passt, z.B. durch Triangulation bei Verwendung einer Stereokamera.

Es können auch weitere im Eigenfahrzeug 1 verfügbare Informationen herangezogen werden, aus denen abgeschätzt werden kann, dass sich beide Fahrzeuge 1, 2 mit hoher Wahrscheinlichkeit in abgestimmter Weise in kürzeren Ist-Folgeabständen Dlst zueinander auf derselben Fahrbahn 3a in einem Konvoi-Modus M bewegen wollen.

Zur Plausibilisierung ist dabei vorgesehen, dass der Plausibilisierungsschritt PL bzw. die einzelnen Unterschritte ST1, ST2, ST3 ... im Rahmen des Plausibilisierungsschrittes PL jeweils über einen bestimmten Plausibilisierungszeitraum tP durchgeführt werden, um störende Einflüsse zu vermeiden und damit sicherzugehen, dass ein Konvoi-Modus M angemessen ist.

Wird in den einzelnen Unterschritten ST1, ST2, ST3 bzw. im Plausibilisierungsschritt PL wie beschrieben festgestellt, dass eine Fahrt der Fahrzeuge 1, 2 in abgestimmter Weise in kurzen Ist-Folgeabständen Dlst ohne Berücksichtigung der Reaktionszeit tR des Fahrers mit hoher Wahrscheinlichkeit erfolgen soll (Konvoi-Modus M), wird gemäß Fig. 2 in einem zweiten Aktivierungsschritt SA2 die Aktivierung des oben beschriebenen zweiten Betriebsmodus B2 von der Abstandsregel-Steuereinrichtung 5 veranlasst. Wird jedoch festgestellt, dass eine derartige koordinierte Fahrt nicht angemessen ist, weil z.B. die einzelnen Unterschritte ST1, ST2, ST3 darauf hinweisen, dass kein Vorderfahrzeug 2 auf derselben Fahrspur 3a vorhanden ist oder keine V2X-Verbindung 10 über den Plausibilisierungszeitraum tR aufgebaut werden kann, usw. wird in einem ersten Aktivierungsschritt SA1 der erste Betriebsmodus B1 aktiviert.

Gegenüber dem Stand der Technik wird somit vom Eigenfahrzeug 1 eigenständig ermittelt bzw. plausibilisiert, ob eine aufeinander abgestimmte Fahrt in einem Konvoi bzw. in kurzen Ist-Folgeabständen Dlst sinnvoll bzw. angemessen ist. Dies erfolgt ohne den Rückgriff auf einen zentralen Koordinator in einem der Fahrzeuge 1, 2. Das jeweilige Eigenfahrzeug 1 entscheidet somit selbstständig durch eine vorher plausibilisierte Aktivierung des zweiten Betriebsmodus B2, ob es in einen Konvoi eintritt.

Die Plausibilisierung erfolgt normalerweise automatisch, insofern der Fahrer dies wünscht bzw. ein Aktivierungsmittel 13 aktiviert ist. Beispielsweise kann der Fahrer einen Schalter 13a als Aktivierungsmittel 13 zeitweise oder dauerhaft aktivieren, durch den der Plausibilisierungsschritt PL mit einzelnen Unterschritten ST1, ST2, ST3 in den jeweiligen Situationen zeitweise bzw. dauerhaft zugelassen wird. Bei einer Deaktivierung des Schalters 13a hingegen wird immer der erste Betriebsmodus B1 beibehalten, da der Fahrer keine Fahrt in einem Konvoi wünscht.

Weiterhin kann vorgesehen sein, dass der Fahrer durch eine bestimmte Aktion, z.B. das Deaktivieren des Schalters 13a oder das Treten auf das Bremspedal 6a und/oder das Gaspedal 7a, aktiv den zweiten Betriebsmodus B2 deaktiviert, wodurch entweder die Abstandsregelung insgesamt abgebrochen wird oder zunächst automatisch der erste Betriebsmodus B1 aktiviert wird.

### Bezugszeichenliste (Teil der Beschreibung)

- 1: Eigenfahrzeug
- 2: Vorderfahrzeug
- 3: Fahrbahn
- 3a: Fahrspur des Eigenfahrzeuges 1
- 3b: benachbarte Fahrspur
- 4: Abstandsregelsystem
- 5: Abstandsregel-Steuereinrichtung
- 6: Bremssystem des Eigenfahrzeuges
- 6a: Bremspedal
- 7: Antriebssystem des Eigenfahrzeuges
- 7a: Gaspedal
- 8: Umgebungserfassungssystem
- 8a: Radar-Sensor
- 8b: Kamera
- 8c: Lidar-Sensor
- 91: Eigenfahrzeug-V2X-Modul
- 92: Vorderfahrzeug-V2X-Modul
- 93: Infrastruktureinrichtungs-V2X-Modul
- 10: V2X-Verbindung
- 10a: WLAN
- 10b: DSRC
- 11: Infrastruktureinrichtung
- 121: Eigenfahrzeug-Positionserfassungseinrichtung
- 122: Vorderfahrzeug-Positionserfassungseinrichtung
- 13: Aktivierungsmittel
- 13a: Schalter
- 20: Sichtfeld der Kamera 8b
- 30: benachbartes Fahrzeug
- 100: Fahrer
- aSoll: Fahrzeug-Soll-Verzögerung
- aSoll1: Eigenfahrzeug-Soll-Verzögerung
- aSoll2: Vorderfahrzeug-Soll-Verzögerung
- B: Betriebsmodi des Abstandsregelsystems 4
- B1: erster Betriebsmodus
- B2: zweiter Betriebsmodus
- BV1: Bremsvermögen des Eigenfahrzeuges 1
- BV2: Bremsvermögen des Vorderfahrzeuges 2
- C: Kameradaten
- DB: Brems-Sicherheitsabstand
- Dlst: Ist-Folgeabstand
- DL: Latenzabstand
- DR: Reaktionsabstand
- DZ: Zusatz-Abstand
- DSoll: Soll-Folgeabstand
- DSoll1: erster Soll-Folgeabstand
- DSoll2: zweiter Soll-Folgeabstand
- DW: Mindest-Sicherheitsabstand
- F: fahrdynamische Informationen
- M: Konvoi-Modus
- P: globale Positon
- P1: globale Eigenfahrzeug-Position
- P2: globale Vorderfahrzeug-Position
- PL: Plausibilisierungsschritt
- S: Umgebungssignale
- tL: Latenzzeit
- tP: Plausibilisierungszeitraum
- tR: Reaktionszeit des Fahrers
- U: Fahrzeugumgebung
- V: V2X-Daten
- vlst1: Eigenfahrzeug-Ist-Geschwindigkeit
- vlst2: Vorderfahrzeug-Ist-Geschwindigkeit
- SA1: ersten Aktivierungsschritt
- SA2: zweiter Aktivierungsschritt
- ST1, ST2, ST3: Unterschritte des Plausibilisierungsschrittes PL

## Patentansprüche

1. Verfahren zum Steuern eines Eigenfahrzeuges (1) mit einem Bremssystem (6), einem Antriebssystem (7) und einem Abstandsregelsystem (4), wobei das Abstandsregelsystem (4) ausgebildet ist, einen Ist-Folgeabstand (Dlst) zwischen dem Eigenfahrzeug (1) und einem vorausfahrenden Vorderfahrzeug (2) auf einen vorgegebenen Soll-Folgeabstand (DSoll) einzuregeln, wobei der Soll-Folgeabstand (DSoll) in Abhängigkeit eines aktivierten Betriebsmodus (B) des Abstandsregelsystems (4) vorgegeben wird, wobei in einem aktivierten ersten Betriebsmodus (B1) ein erster Soll-Folgeabstand (DSoll1) in Abhängigkeit einer Reaktionszeit (tR) eines Fahrers (100) des Eigenfahrzeuges (1) (SA1) vorgegeben wird,
wobei in einem aktivierten zweiten Betriebsmodus (B2) ein zweiter Soll-Folgeabstand (DSoll2) unabhängig von der Reaktionszeit (tR) des Fahrers (100) des Eigenfahrzeuges (1) (SA2) vorgegeben wird,
wobei zur Aktivierung des zweiten Betriebsmodus (B2) (SA2) in einem Plausibilisierungsschritt (PL) geprüft wird, ob zwischen dem Vorderfahrzeug (2) und dem Eigenfahrzeug (1) V2X-Daten (V) über eine V2X-Verbindung (10) ausgetauscht werden oder ausgetauscht werden können (ST1) **dadurch gekennzeichnet, dass**
der erste Soll-Folgeabstand (DSoll1) mit dem zweiten Soll-Folgeabstand (DSoll2) und/oder die Reaktionszeit (tR) des Fahrers (100) des Eigenfahrzeugs (1) mit der Latenzzeit (tL) verglichen wird, und
bei Aktivierung des zweiten Betriebsmodus (B2) der zweite Soll-Folgeabstand (DSoll2) gleich dem ersten Soll-Folgeabstand (DSoll1) gewählt wird oder automatisiert der erste Betriebsmodus (B1) aktiviert wird, wenn festgestellt wird, dass der zweite Soll-Folgeabstand (DSoll2) größer ist als der erste Soll-Folgeabstand (DSoll1) und/oder die Latenzzeit (tL) größer ist als die Reaktionszeit (tR) des Fahrers (100) des Eigenfahrzeugs (1).

2. Verfahren nach Anspruch 1, **dadurch gekennzeichnet, dass** der erste Betriebsmodus (B1) aktiviert wird, wenn zwischen dem Vorderfahrzeug (2) und dem Eigenfahrzeug (1) keine V2X-Daten (V) über eine V2X-Verbindung (10) ausgetauscht werden oder ausgetauscht werden können.

3. Verfahren nach Anspruch 1 oder 2, **dadurch gekennzeichnet, dass** zur Aktivierung des zweiten Betriebsmodus (B2) weiterhin geprüft wird, ob sich das vorausfahrende Vorderfahrzeug (2) auf derselben Fahrspur (3a, 3b) wie das Eigenfahrzeug (1) befindet (ST2, ST3), vorzugsweise durch Vergleichen einer globalen Vorderfahrzeug-Position (P2) mit einer globalen Eigenfahrzeug-Position (P1) (ST2), wobei die globale Vorderfahrzeug-Position (P2) aus den über die V2X-Verbindung (10) übertragenen V2X-Daten (V) abgeleitet wird.

4. Verfahren nach einem der vorhergehenden Ansprüche, **dadurch gekennzeichnet, dass** zur Aktivierung des zweiten Betriebsmodus (B2) in dem Plausibilisierungsschritt (PL) weiterhin geprüft wird, ob der Ist-Folgeabstand (Dlst) zwischen dem Eigenfahrzeug (1) und dem Vorderfahrzeug (2) in etwa gleichbleibt.

5. Verfahren nach einem der vorhergehenden Ansprüche, **dadurch gekennzeichnet, dass** zur Aktivierung des zweiten Betriebsmodus (B2) in dem Plausibilisierungsschritt (PL) weiterhin geprüft wird, ob sich das Vorderfahrzeug (2) in einem Sichtfeld (20) einer Kamera (8b) des Eigenfahrzeuges (1) befindet und anhand von Kameradaten (C) der Kamera (8b) erkannt wird, ob das Vorderfahrzeug (2) auf derselben Fahrspur (3a) wie das Eigenfahrzeug (1) fährt.

6. Verfahren nach Anspruch 5, **dadurch gekennzeichnet, dass** zur Aktivierung des zweiten Betriebsmodus (B2) in dem Plausibilisierungsschritt (PL) weiterhin geprüft wird,
- ob über die V2X-Verbindung (10) übertragene fahrdynamische Informationen (F), beispielsweise eine Vorderfahrzeug-Soll-Verzögerung (aSoll2) und/oder eine Vorderfahrzeug-Ist-Geschwindigkeit (vlst2), mit den von der Kamera (8b) ausgegebenen Kameradaten (C) übereinstimmen, und/oder
- ob der vom Abstandsregelsystem (4) ermittelte Ist-Folgeabstand (Dlst) aus den von der Kamera (8b) ermittelten Kameradaten (C) hergeleitet werden kann.

7. Verfahren nach einem der vorhergehenden Ansprüche, **dadurch gekennzeichnet, dass** der Plausibilisierungsschritt (PL) zur Aktivierung des zweiten Betriebsmodus (B2) über einen Plausibilisierungszeitraum (tL) durchgeführt wird.

8. Verfahren nach einem der vorhergehenden Ansprüche, **dadurch gekennzeichnet, dass** der zweite Betriebsmodus (B2) aktiviert wird, wenn in dem Plausibilisierungsschritt (PL) plausibel festgestellt wird, dass die Fahrzeuge (1, 2), insbesondere das Eigenfahrzeug (1), beabsichtigt bzw. beabsichtigen in einem Konvoi-Modus (M) in einem Ist-Folgeabstand (Dlst) ohne Berücksichtigung der Reaktionszeit (tR) des Fahrers (100) des Eigenfahrzeugs (1) zueinander zu fahren.

9. Verfahren nach einem der vorhergehenden Ansprüche, **dadurch gekennzeichnet, dass** die Reaktionszeit (tR) des Fahrers (100) des Eigenfahrzeugs (1) zwischen 0,8s und 1,5s liegt.

10. Verfahren nach einem der vorhergehenden Ansprüche, **dadurch gekennzeichnet, dass**
- der erste Soll-Folgeabstand (DSoll1) aus einem Mindest-Sicherheitsabstand (DW), der zumindest einen Reaktionsabstand (DR) berücksichtigt, und
- der zweite Soll-Folgeabstand (DSoll2) aus dem Mindest-Sicherheitsabstand (DW), der zumindest einen Latenzabstand (DL) berücksichtigt und den Reaktionsabstand (DR) nicht berücksichtigt,
folgt, wobei
- der Reaktionsabstand (DR) aus der Reaktionszeit (tR) des Fahrers (100) des Eigenfahrzeugs (1) unter Berücksichtigung der aktuellen Eigenfahrzeug-Ist-Geschwindigkeit (vlst1), und
- der Latenzabstand (DL) zumindest aus einer Latenzzeit (tL) unter Berücksichtigung der aktuellen Eigenfahrzeug-Ist-Geschwindigkeit (vlst1) ermittelt wird, wobei die Latenzzeit (tL) die Zeit zum Übertragen der V2X-Daten (V) zwischen dem Eigenfahrzeug (1) und dem Vorderfahrzeug (2) über die V2X-Verbindung (10) angibt.

11. Verfahren nach Anspruch 10, **dadurch gekennzeichnet, dass** der ausgewählte Mindest-Sicherheitsabstand (DW) weiterhin einen Brems-Sicherheitsabstand (DB) berücksichtigt, wobei der Brems-Sicherheitsabstand (DB) aus einem Bremsvermögen (BV1, BV2) der Fahrzeuge (1, 2) folgt.

12. Verfahren nach Anspruch 10 oder 11, **dadurch gekennzeichnet, dass**
- der erste Soll-Folgeabstand (DSoll1) aus einer Summe aus Mindest-Sicherheitsabstand (DW) zumindest unter Berücksichtigung des Reaktionsabstandes (DR) und einem vom Fahrer (100) ausgewählten Zusatz-Abstand (DZ); und
- der zweite Soll-Folgeabstand (DSoll2) aus einer Summe aus Mindest-Sicherheitsabstand (DW) zumindest unter Berücksichtigung des Latenzabstandes (DL) und ohne Berücksichtigung des Reaktionsabstandes (DR) und einem vom Fahrer (100) ausgewählten Zusatz-Abstand (DZ) folgt.

13. Verfahren nach einem der vorhergehenden Ansprüche , **dadurch gekennzeichnet, dass** der Fahrer (100) optisch und/oder akustisch und/oder haptisch gewarnt wird, wenn festgestellt wird, dass der zweite Soll-Folgeabstand (DSoll2) größer ist als der erste Soll-Folgeabstand (DSoll1) und/oder die Latenzzeit (tL) größer ist als die Reaktionszeit (tR) des Fahrers (100) des Eigenfahrzeugs (1).

14. Verfahren nach einem der vorhergehenden Ansprüche, **dadurch gekennzeichnet, dass** der Plausibilisierungsschritt (PL) lediglich bei Aktivierung eines Aktivierungsmittels (13) zugelassen wird, wobei das Aktivierungsmittel (13) beispielsweise ein im Eigenfahrzeug (1) angeordneter Schalter (13a) ist, der vom Fahrer (100) zeitweise oder dauerhaft aktiviert werden kann.

15. Verfahren nach Anspruch 14, **dadurch gekennzeichnet, dass** bei Deaktivierung des Aktivierungsmittels (13) automatisch der erste Betriebsmodus (B1) aktiviert oder beibehalten wird.

16. Verfahren nach einem der vorhergehenden Ansprüche, **dadurch gekennzeichnet, dass** der Fahrer (100) den zweiten Betriebsmodus (B2) deaktivieren kann, beispielsweise durch das Bedienen eines Bremspedals (6a) und/oder eines Gaspedals (7a).

17. Verfahren nach Anspruch 16, **dadurch gekennzeichnet, dass** durch die Deaktivierung des zweiten Betriebsmodus (B2) durch den Fahrer (100) das Abstandsregelsystem (4) deaktiviert oder der erste Betriebsmodus (B1) aktiviert wird.

18. Verfahren nach einem der vorhergehenden Ansprüche, **dadurch gekennzeichnet, dass** der Ist-Folgeabstand (Dlst) zwischen dem Vorderfahrzeug (1) und dem Eigenfahrzeug (2) aus Umgebungs-Signalen (S) eines Radar-Sensors (8a) und/oder eines Lidar-Sensors (8c) im Eigenfahrzeug (1) ermittelt wird.

19. Abstandsregel-Steuereinrichtung (5) in einem Eigenfahrzeug (1), insbesondere zur Durchführung eines Verfahrens nach einem der vorhergehenden Ansprüche, wobei die Abstandsregel-Steuereinrichtung (5) ausgebildet ist, einen Ist-Folgeabstand (Dlst) zwischen dem Eigenfahrzeug (1) und einem vorausfahrenden Vorderfahrzeug (2) auf einen vorgebbaren Soll-Folgeabstand (DSoll) einzuregeln, wobei der Soll-Folgeabstand (DSoll) in Abhängigkeit eines von der Abstandsregel-Steuereinrichtung (5) aktivierbaren Betriebsmodus (B) des Abstandsregelsystems (4) vorgebbar ist, wobei
in einem von der Abstandsregel-Steuereinrichtung (5) aktivierbaren ersten Betriebsmodus (B1) ein erster Soll-Folgeabstand (DSoll1) in Abhängigkeit einer Reaktionszeit (tR) eines Fahrers (100) des Eigenfahrzeuges (1) vorgebbar ist,
wobei in einem von der Abstandsregel-Steuereinrichtung (5) aktivierbaren zweiten Betriebsmodus (B2) ein zweiter Soll-Folgeabstand (DSoll2) unabhängig von der Reaktionszeit (tR) des Fahrers (100) des Eigenfahrzeuges (1) vorgebbar ist,
wobei die Abstandsregel-Steuereinrichtung (5) zur Aktivierung des zweiten Betriebsmodus (B2) (SA2) so ausgelegt ist, dass in einem Plausibilisierungsschritt (PL) geprüft werden kann, ob zwischen dem Vorderfahrzeug (2) und dem Eigenfahrzeug (1) V2X-Daten (V) über eine V2X-Verbindung (10) ausgetauscht werden oder ausgetauscht werden können, **dadurch gekennzeichnet, dass**
die Abstandsregel-Steuereinrichtung (5) so ausgelegt ist, dass der erste Soll-Folgeabstand (DSoll1) mit dem zweiten Soll-Folgeabstand (DSoll2) und/oder die Reaktionszeit (tR) des Fahrers (100) des Eigenfahrzeugs (1) mit der Latenzzeit (tL) verglichen wird, und
bei Aktivierung des zweiten Betriebsmodus (B2) der zweite Soll-Folgeabstand (DSoll2) gleich dem ersten Soll-Folgeabstand (DSoll1) gewählt wird oder automatisiert der erste Betriebsmodus (B1) aktiviert wird, wenn festgestellt wird, dass der zweite Soll-Folgeabstand (DSoll2) größer ist als der erste Soll-Folgeabstand (DSoll1) und/oder die Latenzzeit (tL) größer ist als die Reaktionszeit (tR) des Fahrers (100) des Eigenfahrzeugs (1).

20. Eigenfahrzeug (1) mit einem Abstandsregelsystem (4) aufweisend eine Abstandsregel-Steuereinrichtung (5) nach Anspruch 19.

## Claims

1. Method for controlling a local vehicle (1) having a brake system (6), a drive system (7) and a distance-control system (4), the distance-control system (4) being designed to adjust an actual following distance (Dlst) between the local vehicle (1) and a front vehicle (2) traveling ahead to a predetermined target following distance (DSoll), the target following distance (DSoll) being predetermined depending on an activated operating mode (B) of the distance-control system (4), a first target following distance (DSoll1) being predetermined depending on a reaction time (tR) of a driver (100) of the local vehicle (1) (SA1) in an activated first operating mode (B1),
a second target following distance (DSoll2) being predetermined independently of the reaction time (tR) of the driver (100) of the local vehicle (1) (SA2) in an activated second operating mode (B2),
whether V2X data (V) are exchanged or can be exchanged between the front vehicle (2) and the local vehicle (1) via a V2X connection (10) being checked in order to activate the second operating mode (B2) (SA2) in a plausibility check step (PL) (ST1),
**characterized in that**
the first target following distance (DSoll1) is compared with the second target following distance (DSoll2) and/or the reaction time (tR) of the driver (100) of the local vehicle (1) is compared with the latency time (tL), and
when the second operating mode (B2) is activated, the second target following distance (DSoll2) is selected to be equal to the first target following distance (DSoll1) or the first operating mode (B1) is automatically activated if it is determined that the second target following distance (DSoll2) is greater than the first target following distance (DSoll1) and/or the latency time (tL) is greater than the reaction time (tR) of the driver (100) of the local vehicle (1).

2. Method according to claim 1, **characterized in that** the first operating mode (B1) is activated when V2X data (V) are not exchanged or cannot be exchanged between the front vehicle (2) and the local vehicle (1) via a V2X connection (10).

3. Method according to either claim 1 or claim 2, **characterized in that,** in order to activate the second operating mode (B2), it is further checked whether the front vehicle (2) traveling ahead is located in the same lane (3a, 3b) as the local vehicle (1) (ST2, ST3), preferably by comparing a global front vehicle position (P2) with a global local vehicle position (P1) (ST2), the global front vehicle position (P2) being derived from the V2X data (V) transmitted via the V2X connection (10).

4. Method according to any of the preceding claims, **characterized in that,** in order to activate the second operating mode (B2), it is further checked in the plausibility check step (PL) whether the actual following distance (Dlst) between the local vehicle (1) and the front vehicle (2) remains approximately constant.

5. Method according to any of the preceding claims, **characterized in that,** in order to activate the second operating mode (B2), it is further checked in the plausibility check step (PL) whether the front vehicle (2) is located in a field of view (20) of a camera (8b) of the local vehicle (1) and it is identified on the basis of camera data (C) of the camera (8b) whether the front vehicle (2) travels in the same lane (3a) as the local vehicle (1).

6. Method according to claim 5, **characterized in that,** in order to activate the second operating mode (B2), it is further checked in the plausibility check step (PL)
- whether dynamic driving information (F) transmitted via the V2X connection (10), for example a target front vehicle deceleration (aSoll2) and/or an actual front vehicle speed (vlst2), matches the camera data (C) output by the camera (8b), and/or
- whether the actual following distance (Dlst) determined by the distance-control system (4) can be derived from the camera data (C) determined by the camera (8b).

7. Method according to any of the preceding claims, **characterized in that** the plausibility check step (PL) for activating the second operating mode (B2) is carried out over a plausibility check period (tL).

8. Method according to any of the preceding claims, **characterized in that** the second operating mode (B2) is activated when it is plausibly established in the plausibility check step (PL) that the vehicles (1, 2), in particular the local vehicle (1), are or is intended to travel in a convoy mode (M) at an actual following distance (Dlst), without taking into account the reaction time (tR) of the driver (100) of the local vehicle (1).

9. Method according to any of the preceding claims, **characterized in that** the reaction time (tR) of the driver (100) of the local vehicle (1) is between 0.8 s and 1.5 s.

10. Method according to any of the preceding claims, **characterized in that**
- the first target following distance (DSoll1) results from a minimum safety distance (DW) which takes into account at least one reaction distance (DR), and
- the second target following distance (DSoll2) results from the minimum safety distance (DW) which takes into account at least one latency distance (DL) and does not take into account the reaction distance (DR),
- the reaction distance (DR) being determined from the reaction time (tR) of the driver (100) of the local vehicle (1), taking into account the current actual local vehicle speed (vlst1), and
- the latency distance (DL) being determined at least from a latency time (tL), taking into account the current actual local vehicle speed (vlst1), the latency time (tL) indicating the time for transmitting the V2X data (V) between the local vehicle (1) and the front vehicle (2) via the V2X connection (10).

11. Method according to claim 10, **characterized in that** the selected minimum safety distance (DW) further takes into account a brake safety distance (DB), the brake safety distance (DB) resulting from a braking power (BV1, BV2) of the vehicles (1, 2).

12. Method according to either claim 10 or claim 11, **characterized in that**
- the first target following distance (DSoll1) results from a total of the minimum safety distance (DW), at least taking into account the reaction distance (DR), and an additional distance (DZ) selected by the driver (100); and
- the second target following distance (DSoll2) results from a total of the minimum safety distance (DW), at least taking into account the latency distance (DL) and without taking into account the reaction distance (DR), and an additional distance (DZ) selected by the driver (100).

13. Method according to any of the preceding claims, **characterized in that** the driver (100) is warned optically and/or acoustically and/or haptically when it is established that the second target following distance (DSoll2) is greater than the first target following distance (DSoll1) and/or the latency time (tL) is greater than the reaction time (tR) of the driver (100) of the local vehicle (1).

14. Method according to any of the preceding claims, **characterized in that** the plausibility check step (PL) is only permitted when an activation means (13) is activated, the activation means (13) being, for example, a switch (13a) which is arranged in the local vehicle (1) and which can be temporarily or permanently activated by the driver (100).

15. Method according to claim 14, **characterized in that** the first operating mode (B1) is automatically activated or maintained when the activation means (13) is deactivated.

16. Method according to any of the preceding claims, **characterized in that** the driver (100) can deactivate the second operating mode (B2), for example by operating a brake pedal (6a) and/or an accelerator pedal (7a).

17. Method according to claim 16, **characterized in that** the distance-control system (4) is deactivated or the first operating mode (B1) is activated when the driver (100) deactivates the second operating mode (B2).

18. Method according to any of the preceding claims, **characterized in that** the actual following distance (Dlst) between the front vehicle (1) and the local vehicle (2) is determined from environment signals (S) of a radar sensor (8a) and/or a Lidar sensor (8c) in the local vehicle (1).

19. Distance-control controller (5) in a local vehicle (1), in particular for carrying out a method according to any of the preceding claims, the distance-control controller (5) being designed to adjust an actual following distance (Dlst) between the local vehicle (1) and a front vehicle (2) traveling ahead to a predetermined target following distance (DSoll), the target following distance (DSoll) being predeterminable depending on an operating mode (B) of the distance-control system (4) which can be activated by the distance-control controller (5),
a first target following distance (DSoll1) being predeterminable depending on a reaction time (tR) of a driver (100) of the local vehicle (1) in a first operating mode (B1) which can be activated by the distance-control controller (5),
a second target following distance (DSoll2) being predeterminable independently of the reaction time (tR) of the driver (100) of the local vehicle (1) in a second operating mode (B2) which can be activated by the distance-control controller (5),
the distance-control controller (5) for activating the second operating mode (B2) (SA2) being designed such that it can be checked in a plausibility check step (PL) whether V2X data (V) are exchanged or can be exchanged between the front vehicle (2) and the local vehicle (1) via a V2X connection (10), **characterized in that**
the distance-control controller (5) is designed such that the first target following distance (DSoll1) is compared with the second target following distance (DSoll2) and/or the reaction time (tR) of the driver (100) of the local vehicle (1) is compared with the latency time (tL), and
when the second operating mode (B2) is activated, the second target following distance (DSoll2) is selected to be equal to the first target following distance (DSoll1) or the first operating mode (B1) is automatically activated if it is determined that the second target following distance (DSoll2) is greater than the first target following distance (DSoll1) and/or the latency time (tL) is greater than the reaction time (tR) of the driver (100) of the local vehicle (1).

20. Local vehicle (1) having a distance-control system (4) comprising a distance-control controller (5) according to claim 19.

## Revendications

1. Procédé de commande d'un véhicule propre (1) avec un système de freinage (6), un système d'entraînement (7) et un système de régulation de distance (4), dans lequel le système de régulation de distance (4) est conçu pour réguler une distance de suivi réelle (Dlst) entre le véhicule propre (1) et un véhicule avant (2) roulant devant sur une distance de suivi théorique prédéfinie (DSoll), dans lequel la distance de suivi théorique (DSoll) est prédéfinie en fonction d'un mode de fonctionnement activé (B) du système de régulation de distance (4), dans lequel dans un premier mode de fonctionnement activé (B1) une première distance de suivi théorique (DSoll1) est prédéfinie en fonction d'un temps de réaction (tR) d'un conducteur (100) du véhicule propre (1) (SA1),
dans lequel dans un second mode de fonctionnement activé (B2) une seconde distance de suivi théorique (DSoll2) est prédéfinie indépendamment du temps de réaction (tR) du conducteur (100) du véhicule propre (1) (SA2),
dans lequel pour l'activation du second mode de fonctionnement (B2) (SA2) il est vérifié dans une étape de vérification de plausibilité (PL) si des données V2X (V) sont échangées ou peuvent être échangées entre le véhicule avant (2) et le véhicule propre (1) par l'intermédiaire d'une connexion V2X (10) (ST1)
**caractérisé en ce que**
la première distance de suivi théorique (DSoll1) est comparée à la seconde distance de suivi théorique (DSoll2) et/ou le temps de réaction (tR) du conducteur (100) du véhicule propre (1) est comparé au temps de latence (tL) et
lors de l'activation du second mode de fonctionnement (B2) la seconde distance de suivi théorique (DSoll2) est choisie identique à la première distance de suivi théorique (DSo!!1) ou le premier mode de fonctionnement (B1) est activé de manière automatisée lorsqu'il est déterminé que la seconde distance de suivi théorique (DSoll2) est supérieure à la première distance de suivi théorique (DSoll1) et/ou le temps de latence (tL) est supérieur au temps de réaction (tR) du conducteur (100) du véhicule propre (1).

2. Procédé selon la revendication 1, **caractérisé en ce que** le premier mode de fonctionnement (B1) est activé lorsqu'aucune donnée V2X (V) n'est échangée ou ne peut être échangée entre le véhicule avant (2) et le véhicule propre (1) par l'intermédiaire d'une connexion V2X (10).

3. Procédé selon la revendication 1 ou 2, **caractérisé en ce que** pour l'activation du second mode de fonctionnement (B2) il est en outre vérifié si le véhicule avant (2) roulant devant se trouve sur la même voie de circulation (3a, 3b) que le véhicule propre (1) (ST2, ST3), de préférence par comparaison d'une position de véhicule avant globale (P2) à une position de véhicule propre globale (P1) (ST2), dans lequel la position de véhicule avant globale (P2) est dérivée des données V2X (V) transmises par l'intermédiaire de la connexion V2X (10).

4. Procédé selon l'une quelconque des revendications précédentes, **caractérisé en ce que** pour l'activation du second mode de fonctionnement (B2), dans l'étape de vérification de plausibilité (PL), il est en outre vérifié si la distance de suivi réelle (Dlst) entre le véhicule propre (1) et le véhicule avant (2) reste à peu près identique.

5. Procédé selon l'une quelconque des revendications précédentes, **caractérisé en ce que** pour l'activation du second mode de fonctionnement (B2), dans l'étape de vérification de plausibilité (PL), il est en outre vérifié si le véhicule avant (2) se trouve dans un champ de vision (20) d'une caméra (8b) du véhicule propre (1) et, à l'aide de données de caméra (C) de la caméra (8b) une reconnaissance est effectuée établissant si le véhicule avant (2) se déplace sur la même voie de circulation (3a) que le véhicule propre (1).

6. Procédé selon la revendication 5, **caractérisé en ce que** pour l'activation du second mode de fonctionnement (B2), dans l'étape de vérification de plausibilité (PL), il est en outre vérifié,
- si des informations sur la dynamique de conduite (F) transmises par l'intermédiaire de la connexion V2X (10), par exemple une décélération théorique du véhicule avant (aSoll2) et/ou une vitesse réelle du véhicule avant (vlst2), coïncident avec les données de caméra (C) émises par la caméra (8b) et/ou
- si la distance de suivi réelle (Dlst) déterminée par le système de régulation de distance (4) peut être déduite à partir des données de caméra (C) déterminées par la caméra (8b).

7. Procédé selon l'une quelconque des revendications précédentes, **caractérisé en ce que** l'étape de vérification de plausibilité (PL) est réalisée pour l'activation du second mode de fonctionnement (B2) sur une période de vérification de plausibilité (tL).

8. Procédé selon l'une quelconque des revendications précédentes, **caractérisé en ce que** le second mode de fonctionnement (B2) est activé lorsque, dans l'étape de vérification de plausibilité (PL), il est déterminé comme plausible que les véhicules (1, 2), en particulier le véhicule propre (1), a ou ont l'intention de conduire l'une par rapport à l'autre dans un mode de convoi (M) dans une distance de suivi réelle (Dlst) sans tenir compte du temps de réaction (tR) du conducteur (100) du véhicule propre (1).

9. Procédé selon l'une quelconque des revendications précédentes, **caractérisé en ce que** le temps de réaction (tR) du conducteur (100) du véhicule propre (1) se trouve entre 0,8 s et 1,5 s.

10. Procédé selon l'une quelconque des revendications précédentes, **caractérisé en ce que**
- la première distance de suivi théorique (DSoll1) découle d'une distance de sécurité minimale (DW), qui tient compte au moins d'une distance de réaction (DR) et
- la seconde distance de suivi théorique (DSoll2) découle de la distance de sécurité minimale (DW), qui tient compte au moins d'une distance de latence (DL) et ne tient pas compte de la distance de réaction (DR),
dans lequel
- la distance de réaction (DR) est déterminée à partir du temps de réaction (tR) du conducteur (100) du véhicule propre (1) en tenant compte de la vitesse réelle du véhicule propre actuelle (vlstl) et
- la distance de latence (DL) est déterminée au moins à partir d'un temps de latence (tL) en tenant compte de la vitesse réelle de véhicule propre actuelle (vlst1), dans lequel le temps de latence (tL) indique le temps de transmission des données V2X (V) entre le véhicule propre (1) et le véhicule avant (2) par l'intermédiaire de la connexion V2X (10).

11. Procédé selon la revendication 10, **caractérisé en ce que** la distance de sécurité minimale choisie (DW) tient en outre compte d'une distance de sécurité de freinage (DB), dans lequel la distance de sécurité de freinage (DB) découle d'une manoeuvre de freinage (BV1, BV2) des véhicules (1, 2).

12. Procédé selon la revendication 10 ou 11, **caractérisé en ce que**
- la première distance de suivi théorique (DSoll1) découle d'une somme de la distance de sécurité minimale (DW) au moins en tenant compte de la distance de réaction (DR) et d'une distance supplémentaire (DZ) choisie par le conducteur (100) ; et
- la seconde distance de suivi théorique (DSoll2) découle d'une somme de la distance de sécurité minimale (DW) au moins en tenant compte de la distance de latence (DL) et sans tenir compte de la distance de réaction (DR) et d'une distance supplémentaire (DZ) choisie par le conducteur (100).

13. Procédé selon l'une quelconque des revendications précédentes, **caractérisé en ce que** le conducteur (100) est averti par voie optique et/ou acoustique et/ou haptique, lorsqu'il est déterminé que la seconde distance de suivi théorique (DSoll2) est supérieure à la première distance de suivi théorique (DSoll1) et/ou le temps de latence (tL) est supérieur au temps de réaction (tR) du conducteur (100) du véhicule propre (1).

14. Procédé selon l'une quelconque des revendications précédentes, **caractérisé en ce que** l'étape de vérification de plausibilité (PL) est uniquement autorisée lors de l'activation d'un moyen d'activation (13), dans lequel le moyen d'activation (13) est par exemple un commutateur (13a) agencé dans le véhicule propre (1), qui peut être activé par le conducteur (100) de façon temporaire ou durable.

15. Procédé selon la revendication 14, **caractérisé en ce que** lors de la désactivation du moyen d'activation (13) le premier mode de fonctionnement (B1) est activé ou maintenu de manière automatique.

16. Procédé selon l'une quelconque des revendications précédentes, **caractérisé en ce que** le conducteur (100) peut désactiver le second mode de fonctionnement (B2), par exemple par utilisation d'une pédale de frein (6a) et/ou d'une pédale d'accélérateur (7a).

17. Procédé selon la revendication 16, **caractérisé en ce que** par la désactivation du second mode de fonctionnement (B2) par le conducteur (100) le système de régulation de distance (4) est désactivé ou le premier mode de fonctionnement (B1) est activé.

18. Procédé selon l'une quelconque des revendications précédentes, **caractérisé en ce que** la distance de suivi réelle (Dlst) entre le véhicule avant (1) et le véhicule propre (2) est déterminée à partir de signaux d'environnement (S) d'un capteur radar (8a) et/ou d'un capteur lidar (8c) dans le véhicule propre (1).

19. Dispositif de commande de régulation de distance (5) dans un véhicule propre (1), en particulier pour la réalisation d'un procédé selon l'une quelconque des revendications précédentes, dans lequel le dispositif de commande de régulation de distance (5) est conçu pour réguler une distance de suivi réelle (Dlst) entre un véhicule propre (1) et un véhicule avant (2) roulant devant à un distance de suivi théorique pouvant être prédéfinie (DSoll), dans lequel la distance de suivi théorique (DSoll) peut être prédéfinie en fonction d'un mode de fonctionnement (B) du système de régulation de distance (4) pouvant être activé par le dispositif de commande de régulation de distance (5), dans lequel
dans un premier mode de fonctionnement (B1) pouvant être activé par le dispositif de commande de régulation de distance (5), une première distance de suivi théorique (DSoll1) peut être prédéfinie en fonction d'un temps de réaction (tR) d'un conducteur (100) du véhicule propre (1),
dans lequel dans un second mode de fonctionnement (B2) pouvant être activé par le dispositif de commande de régulation de distance (5), une seconde distance de suivi théorique (DSoll2) peut être prédéfinie indépendamment du temps de réaction (tR) du conducteur (100) du véhicule propre (1),
dans lequel le dispositif de commande de régulation de distance (5), pour l'activation du second mode de fonctionnement (B2) (SA2), est conçu de manière à ce qu'il soit possible de vérifier dans une étape de vérification de plausibilité (PL) si des données V2X (V) sont échangées ou peuvent être échangées entre le véhicule avant (2) et le véhicule propre (1) par l'intermédiaire d'une connexion V2X (10), **caractérisé en ce que**
le dispositif de commande de régulation de distance (5) est conçu pour que la première distance de suivi théorique (DSoll1) soit comparée à la seconde distance de suivi théorique (DSoll2) et/ou le temps de réaction (tR) du conducteur (100) du véhicule propre (1) soit comparé au temps de latence (tL) et
lors de l'activation du second mode de fonctionnement (B2) la seconde distance de suivi théorique (DSoll2) est choisie identique à la première distance de suivi théorique (DSo!!1) ou le premier mode de fonctionnement (B1) est activé de manière automatisée lorsqu'il est déterminé que la seconde distance de suivi théorique (DSoll2) est supérieure à la première distance de suivi théorique (DSoll1) et/ou le temps de latence (tL) est supérieur au temps de réaction (tR) du conducteur (100) du véhicule propre (1).

20. Véhicule propre (1) comportant un système de régulation de distance (4) présentant un dispositif de commande de régulation de distance (5) selon la revendication 19.
